# EUROPEAN PATENT SPECIFICATION

(11) **EP 4 644 878 B1**
(45) Date of publication and mention of the grant of the patent: **18.11.2026**
(21) Application number: 24785119.9
(22) Date of filing: 29.03.2024
(51) Int. Cl.: G01N 21/95, G01N 21/88, G06T 7/00, G06Q 50/04, H01M 10/42

(54) **MONITORING APPARATUS AND OPERATING METHOD THEREOF**
ÜBERWACHUNGSVORRICHTUNG UND BETRIEBSVERFAHREN DAFÜR
APPAREIL DE SURVEILLANCE ET SON PROCÉDÉ DE FONCTIONNEMENT

(30) Priority: 03.04.2023 KR 20230043688
(43) Date of publication of application: 05.11.2025
(73) Proprietor: LG Energy Solution, Ltd., Seoul 07335 (KR)
(72) Inventor: KIM, Min Ji, Daejeon 34122 (KR); EOM, Dong Hwan, Daejeon 34122 (KR); HONG, Seung Gyun, Daejeon 34122 (KR); LEE, Seung Jun, Daejeon 34122 (KR)
(74) Representative: BCKIP Part mbB
(86) International application number: PCT/KR2024/004091
(87) International publication number: WO 2024/210412

(56) References cited:
- EP-A1- 4 130 721
- WO-A1-2022/130092
- JP-A- 2004 259 513
- KR-A- 20210 010 541
- KR-A- 20220 037 664
- KR-A- 20220 046 824
- KR-A- 20220 130 755
- US-A1- 2021 265 673
- HUBER JOSEF ET AL: "Non-destructive Quality Testing of Battery Separators", PROCEDIA CIRP, vol. 62, 28 February 2018 (2018-02-28), NL, pages 423 - 428, XP093113222, ISSN: 2212-8271, DOI: 10.1016/j.procir.2016.06.002

## Description

### [TECHNICAL FIELD OF THE INVENTION]

The present invention relates to a monitoring device and a method of operating the same.

### [BACKGROUND ART]

A battery cell is classified into cylindrical, prismatic, and pouch types according to the type of a battery case, and the cylindrical battery cell may include an electrode assembly, a battery case of a cylindrical metal can that accommodates the electrode assembly and an electrolyte solution, and a cap assembly assembled above the cylindrical can.

The electrode assembly is formed by interposing a separator between a positive electrode plate formed by coating a positive electrode current collector with a positive electrode active material and a negative electrode plate formed by coating a negative electrode current collector with a negative electrode active material, and the electrode assembly may be manufactured in a jelly roll type, a stack type, or the like depending on the type of battery case and accommodated inside the battery case.

The battery cell may be manufactured through a series of manufacturing processes including an electrode manufacturing process, an assembly process, and a formation process. Here, the assembly process may include an operation of assembling a positive electrode plate and a negative electrode plate manufactured through the electrode manufacturing process and injecting an electrolyte solution inside thereof and include a notching operation, a winding operation, an assembly operation, and a packaging operation.

The packaging process may be defined as a process of injecting and sealing the electrode assembly and electrolyte into the battery case. The cylindrical battery cell is manufactured by mounting the electrode assembly on the cylindrical metal can, welding a negative electrode tab extending from a negative electrode of the electrode assembly to a lower end of the can, and welding a positive electrode tab extending from a positive electrode of the electrode assembly to a top cap of the cap assembly in a state in which the electrode assembly and the electrolyte are embedded.

A top insulator for covering an upper end of the electrode assembly is mounted on an upper surface of the electrode assembly to electrically insulate the electrode assembly and the cap assembly, and an electrode terminal may be connected to an electrode lead wire and connected to an external terminal.

WO 2022/130092 A1 discloses a monitoring system for monitoring safety of a secondary battery by detecting an abnormality in the secondary battery. In order to detect the abnormality, at least a part of the surface of an exterior body of the secondary battery is sprayed or coated with a temperature-sensitive paint. The monitoring system is configured to be provided with a light source for irradiating the temperature-sensitive paint with light.

EP 4 130 721 A1 discloses a debris detection apparatus and a debris detection method, capable of easily detecting a metal debris existing on the surface of an inspection target by emitting electromagnetic waves having a wavelength in a far-infrared band toward the inspection target during a battery manufacturing process and then analyzing the characteristics of reflected waves from the surface of the inspection target through a thermal image recorder

The publication by HUBER JOSEF ET AL: "Non-destructive Quality Testing of Battery Separators", PROCEDIA CIRP, vol. 62, 28 February 2018, pages 423-428, discloses a design of a non-destructive inspection approach for battery separator quality testing.

JP 2004 259513 A discloses a process inspection technique for a sealed battery using a metal bottomed cylindrical battery can, and more particularly to a method and apparatus for inspecting a crack of a battery can.

### [DISCLOSURE OF THE INVENTION]

### [TECHNICAL PROBLEM]

An object of the invention is to provide a monitoring device capable of detecting a defective battery cell by accurately analyzing a state of a top insulator of a battery cell, and a method of operating the same.

The objects of the invention disclosed herein are not limited to the above-described objects, and other objects that are not mentioned will be able to be clearly understood by those skilled in the art from the following descriptions.

### [TECHNICAL SOLUTION]

To this end, the present invention provides a monitoring device according to claim 1.

A monitoring device according to the present invention includes an image acquisition unit configured to acquire an image capturing at least one process processing device related to manufacturing of a battery cell, a state determination unit configured to generate a first determination result obtained by determining whether the battery cell is defective by inputting the acquired image into an artificial intelligence model configured to determine a state of a top insulator of the battery cell, and a determination unit configured to determine whether the battery cell is defective based on the first determination result.

Furthermore, the present invention provides a method of operating a monitoring device according to claim 5.

A method of operating a monitoring device according to the present invention includes an operation of acquiring an image capturing at least one process processing device related to manufacturing of a battery, an operation of generating a first determination result obtained by determining whether the battery cell is defective by inputting the acquired image into an artificial intelligence model configured to determine a state of a top insulator of the battery, and an operation of determining whether the battery cell is defective based on the first determination result.

### [ADVANTAGEOUS EFFECTS OF THE INVENTION]

According to the monitoring device and the method of operating the same according to the present invention, it is possible to detect the defective battery cell by accurately analyzing the state of the top insulator of the battery cell.

The effects of the monitoring device and the method of operating the same according to the present invention are not limited to the above-described effects, and other effects that are not mentioned will be able to be clearly understood by those skilled in the art according to the disclosure of the present document.

### [DESCRIPTION OF DRAWINGS]

FIG. 1 is a block diagram of a monitoring device according to one embodiment of the present disclosure.
FIG. 2 shows a can assembly according to one embodiment of the present disclosure.
FIG. 3 is a view showing a battery unit having a top insulator and a battery unit without the top insulator according to one embodiment disclosed herein.
FIG. 4 shows an image showing foreign substance present inside the top insulator of the battery unit according to one embodiment disclosed herein.
FIG. 5 shows an image of the lifted top insulator of the battery unit according to one embodiment disclosed herein.
FIG. 6 is a view showing a state in which cracks are present in a beading area of the battery unit according to one embodiment disclosed herein.
FIG. 7 is a flowchart showing a method of operating the monitoring device according to one embodiment of the present disclosure.

In the description of the drawings, the same or similar reference numerals may be used for the same or similar components.

### [DESCRIPTION OF EXEMPLARY EMBODIMENTS OF THE INVENTION]

Hereinafter, embodiments of the present invention will be described with reference to the accompanying drawings. However, it should be understood that this is not intended to limit the present invention to specific embodiments and includes various modifications, equivalents, and/or alternatives of the embodiments of the present invention.

It should be understood that the embodiments of the present document and the terms used herein are not intended to limit the technical features described herein to specific embodiments and include various modifications, equivalents, or substitutes of the corresponding embodiments. In the description of the drawings, similar reference numerals may be used for similar or related components. The singular form of a noun corresponding to an item may include one item or a plurality of items unless the relevant context clearly dictates otherwise.

In the present document, each of phrases such as "A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. Terms such as "first," "second," "first," "second," "A," "B," "(a)," or "(b)" may simply be used to distinguish the corresponding component from another and do not limit the corresponding components in another aspect (e.g., importance or order).

When a certain component (e.g., a first component) is described as being "coupled," "connected," or "joined" to another component (e.g., a second component) with or without the terms "functionally" or "communicatively" or "coupled" or "connected," this means that the certain component may be connected to another component directly (e.g., by wire or wirelessly) or indirectly (e.g., through a third component).

A method according to various embodiments disclosed herein may be provided to be included in a computer program product. The computer program product may be traded between sellers and buyers as commodities. The computer program product may be distributed in the form of a device-readable storage medium (e.g., a compact disc read only memory (CD-ROM)) or distributed (e.g., downloaded or uploaded) through application stores or directly online between two user devices. In the case of the online distribution, at least some of the computer program products may be at least temporarily stored or temporarily generated in a device-readable storage medium such as a memory of a server of a manufacturer, a server of an application store, or a relay server.

According to the embodiments disclosed herein, each component (e.g., a module or a program) of the above-described components may include a single object or a plurality of objects, and some of the plurality of objects may be separately disposed in another component. According to the embodiments disclosed herein, one or more components or operations among the above-described corresponding components may be omitted, or one or more other components or operations may be added. Alternatively or additionally, the plurality of components (e.g., modules or programs) may be integrated into one component. In this case, the integrated component may perform one or more functions of each of the plurality of components identically or similarly to those performed by the corresponding component of the plurality of components before the integration. According to the embodiments disclosed herein, operations performed by modules, programs, or other components may be executed sequentially, in parallel, repeatedly, or heuristically, or one or more of the operations may be executed in a different order or omitted, or one or more other operations may be added.

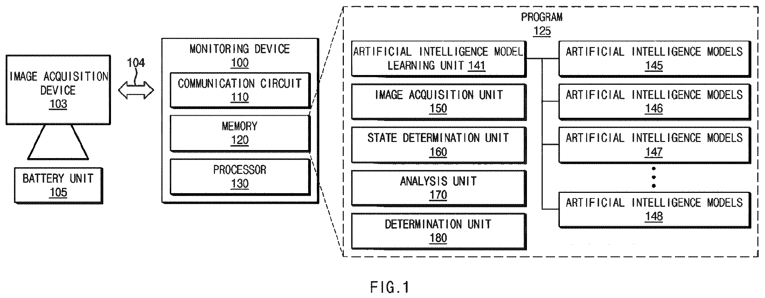

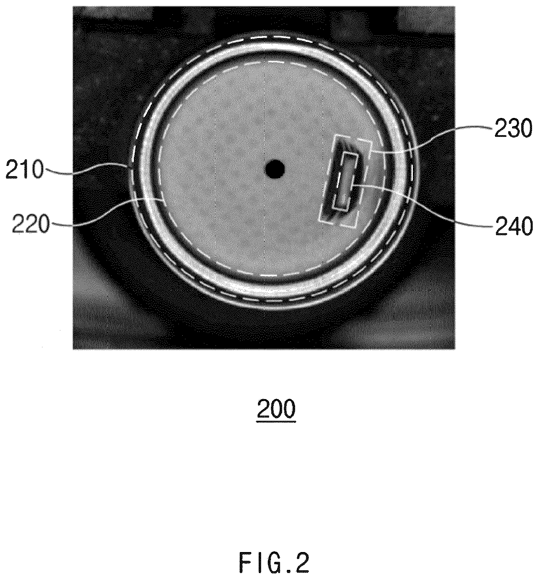

FIG. 1 is a block diagram showing a configuration of a monitoring device 100 according to one embodiment disclosed herein. FIG. 2 shows a can assembly 200 according to one embodiment disclosed herein.

In one embodiment, the monitoring device 100 may determine a state of a battery unit 105 based on an image of the battery unit 105 acquired by an image acquisition device 103. Here, the image acquisition device 103 may include a camera module. Here, the battery unit 105 may be a battery cell or the can assembly 200 included in the battery cell. Here, the can assembly 200 may include a cylindrical can 210, a top insulator (TI) 220, a hole 230 inside the TI 220, and a tab 240 exposed through the hole 230.

The monitoring device 100, according to the invention, determines the state of the battery unit 105 based on rule-based inspection results and artificial intelligence model-based inspection results for the battery unit 105. In one embodiment, the rule-based inspection may include the inspection of at least one of whether the TI 220 of the battery unit 105 is present, whether foreign substance is present in the TI 220, whether foreign substance is present outside the TI 220, or whether the TI 220 is lifted. According to the invention, the artificial intelligence model-based inspection includes the inspection of at least one of whether the TI 220 is present, whether foreign substance is present in the TI 220, whether foreign substance is present outside the TI 220, whether the TI 220 is lifted, and may include whether beading cracks are present. According to the embodiment, items that may be inspected in the artificial intelligence model-based inspection may be more than items that may be inspected in the rule-based inspection. Here, the outside of the TI 220 is an area between an outer perimeter of the TI 220 and the cylindrical can 210 and may be an area in which the TI 220 is beaded to the cylindrical can 210. In addition, the inside of the TI 220 is an area within the outer perimeter of the TI 220 and may be an area within a beading area.

The monitoring device 100, according to the invention, determines that the state of the battery unit 105 is good when both the rule-based test result and the artificial intelligence model-based test result for the battery unit 105 indicate normal. In one embodiment, the monitoring device 100 may determine that the battery unit 105 is a defective product when at least one of the rule-based test result or the artificial intelligence model-based test result for the battery unit 105 indicates failure.

Hereinafter, components of the monitoring device 100 will be described schematically, and then a specific method of operating the monitoring device 100 will be described.

Referring to FIG. 1, the monitoring device 100 may include a communication circuit 110, a memory 120, and a processor 130. According to the embodiment, the monitoring device 100 illustrated in FIG. 1 may further include at least one component (e.g., a display, an input device, or an output device) other than the components illustrated in FIG. 1.

In one embodiment, the communication circuit 110 may establish a wired communication channel and/or wireless communication channel between the monitoring device 100 and the image acquisition device 103 and transmit and receive data with the image acquisition device 103 via the established communication channel.

In one embodiment, the memory 120 may include a volatile memory and/or a non-volatile memory.

In one embodiment, the memory 120 may store data used by at least one component (e.g., the processor 130) of the monitoring device 100. For example, the data may include a program 125 (or an instruction related thereto), input data, or output data. In one embodiment, the instruction may allow the monitoring device 100 to perform operations defined by the instruction when executed by the processor 130.

In one embodiment, the memory 120 may include the program 125 (e.g., an artificial intelligence model learning unit 141, artificial intelligence models 145, 146, 147, and 148, the image acquisition unit 150, a state determination unit 160, an analysis unit 170, and/or a determination unit 180).

In one embodiment, the processor 130 may include a central processing unit, an application processor, a graphics processing unit, a neural processing unit (NPU), an image signal processor, a sensor hub processor, or a communication processor.

In one embodiment, the processor 130 may control at least one another component (e.g., hardware or software component) of the monitoring device 100 connected to the processor 130 by executing the program 125 (e.g., the artificial intelligence model learning unit 141, the artificial intelligence models 145, 146, 147, and 148, the image acquisition unit 150, the state determination unit 160, the analysis unit 170, and/or the determination unit 180) and perform various data processing or calculation.

In one embodiment, the artificial intelligence model learning unit 141 may learn the artificial intelligence models 145, 146, 147, and 148 based on learning data. In one embodiment, the artificial intelligence models 145, 146, 147, and 148 may be models learned to generate output results for different purposes based on different learning data.

In one embodiment, the image acquisition unit 150 may acquire the image of the battery unit 105 from the image acquisition device 103. The state determination unit 160 determines the state of the TI 210 in the can assembly 200 based on the image of the battery unit 105. In one embodiment, the state determination unit 160 determines the state of the TI 210 in the can assembly 200 by inputting the image of the battery unit 105 into the artificial intelligence models 145, 146, 147, and 148. In one embodiment, the analysis unit 170 may analyze the state of the TI 210 in the can assembly 200 by performing the rule-based inspection on the image of the battery unit 105. The determination unit 180 determines whether the battery unit 105 is a good product based on the results of the determination of the state determination unit 160 and the analysis unit 170.

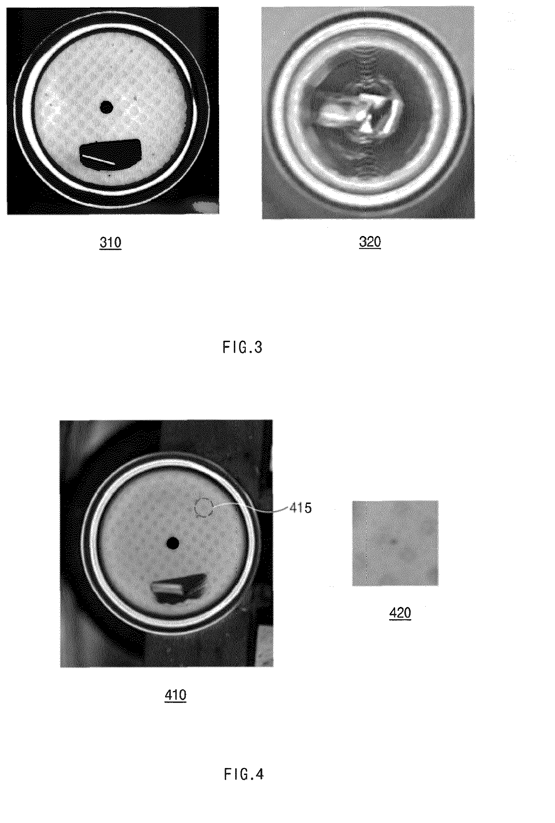

Hereinafter, a method of allowing the monitoring device 100 to determine the state of the battery unit 105 through the artificial intelligence model learning unit 141, the artificial intelligence models 145, 146, 147, and 148, the image acquisition unit 150, the state determination unit 160, the analysis unit 170, and/or the determination unit 180 will be described in detail with reference to FIGS. 3 to 6.

### Learning of artificial intelligence model

FIG. 3 is a view showing a battery unit having the TI and a battery unit without the TI according to one embodiment disclosed herein.

In one embodiment, the artificial intelligence model learning unit 141 may input the image of the battery unit into the artificial intelligence model 145. In one embodiment, the artificial intelligence model 145 may be a model (model based on a convolutional neural network (CNN)) capable of multinomial classification. In one embodiment, the artificial intelligence model 145 may be learned to classify whether the TI is present based on the images 310 and 320 of the battery unit.

In one embodiment, data for learning the artificial intelligence model 145 may include the image 310 of the battery unit in which the TI is normally present, and the image 320 without the TI. In one embodiment, the images 310 and 320 used for learning the artificial intelligence model 145 may be provided in advance.

In one embodiment, the artificial intelligence model 145 may be learned to classify an input image into at least two states based on learning data. Here, the at least two states may include a state in which the TI is normally present in the can assembly and a state without the TI in the can assembly.

FIG. 4 shows an image showing foreign substance present inside the TI of the battery unit according to one embodiment disclosed herein. FIG. 4 includes an image 410 in which foreign substance 415 is present inside the TI, and an image 420 enlarging some area including the foreign substance 415 of the image 410.

In one embodiment, the artificial intelligence model learning unit 141 may input the image of the battery unit into the artificial intelligence model 146. In one embodiment, the artificial intelligence model 146 may be a model capable of multinomial classification. In one embodiment, the artificial intelligence model 146 may be learned to identify the foreign substance 415 based on the image 410 of the battery unit. Here, FIG. 4 shows only the image 410 in which the foreign substance 415 is present, but it is only an example. In one embodiment, the artificial intelligence model 146 may be learned to perform multinomial classification through the image 410 in which the foreign substance 415 is present and the image (not shown) without the foreign substance 415.

In one embodiment, the artificial intelligence model 146 may be learned to classify an input image into at least two states based on learning data. Here, the at least two states may include a state in which a foreign substance is present and a state without the foreign substance.

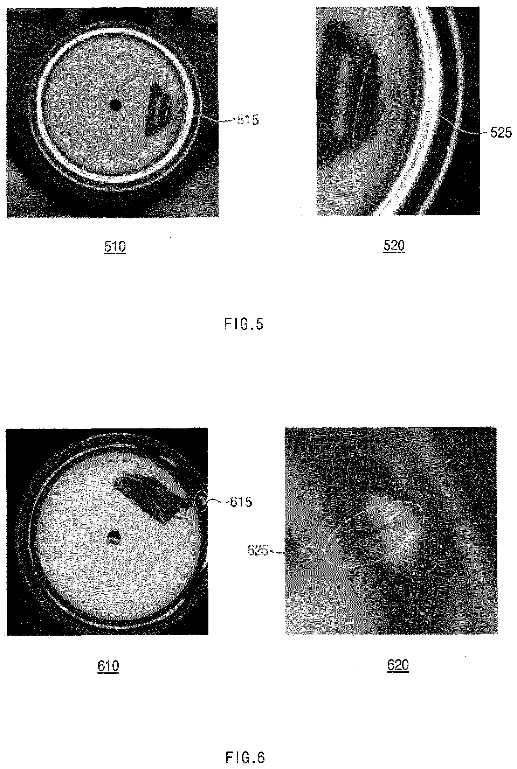

FIG. 5 shows an image of the lifted TI of the battery unit according to one embodiment disclosed herein. FIG. 5 includes an image 510 in which lifting is present inside the TI, and an image 520 enlarging an area 515 in which lifting is present of the image 510.

In one embodiment, the artificial intelligence model learning unit 141 may input the image of the battery unit into the artificial intelligence model 147. In one embodiment, the artificial intelligence model 147 may be a model capable of multinomial classification. In one embodiment, the artificial intelligence model 147 may be learned to identify whether the lifting of the TI is present based on the image 510 of the battery unit. Here, the lifting of the TI may occur in an area adjacent to the cylindrical can among internal areas of the TI.

In one embodiment, data for learning the artificial intelligence model 147 may include the image 510 in which the lifting of the TI is present and an image (not shown) in which the lifting of the TI is not present. In one embodiment, the images used for learning the artificial intelligence model 147 may be provided in advance.

In one embodiment, the artificial intelligence model 147 may be learned to identify a lifted area 515 in the input image based on learning data.

FIG. 6 is a view showing a state in which cracks are present in a beading area of the battery unit according to one embodiment disclosed herein. FIG. 6 includes an image 610 in which cracks are present in the beading area outside the TI, and an image 620 enlarging an area 615 in which the cracks are present of the image 610. Referring to the image 620, it can be seen that cracks are present in an area 625.

In one embodiment, the artificial intelligence model learning unit 141 may input the image of the battery unit into the artificial intelligence model 148. In one embodiment, the artificial intelligence model learning unit 141 may learn the artificial intelligence model 148 to classify the beading state in the can assembly of the battery unit based on the image 610. In one embodiment, the artificial intelligence model 148 may be a model capable of multinomial classification.

In one embodiment, data for learning the artificial intelligence model 148 may include the image 610 in which cracks are present in the beading area, and an image (not shown) in which the cracks are not present in the beading area. In one embodiment, the images used for learning the artificial intelligence model 148 may be provided in advance.

In one embodiment, the artificial intelligence model 148 may be learned to classify an input image into at least two states based on learning data. Here, the at least two states may include a state in which cracks are present in the beading area and a state in which the cracks are not present in the beading area.

### State determination through artificial intelligence model

In one embodiment, the state determination unit 160 may determine the state of the can assembly based on the image of the battery unit 105. The state determination unit 160 determines the state of the can assembly by inputting the image of the battery unit 105 into the artificial intelligence model 145. In one embodiment, the state determination unit 160 may determine the state of the can assembly of the battery unit 105 based on the output of the artificial intelligence model 145. For example, the state determination unit 160 may determine the state of the can assembly of the battery unit 105 based on the state (e.g., whether the TI is present, whether foreign substance is present inside the TI, whether the foreign substance is present outside the TI, whether the lifting of the TI is present, or whether cracks are present in the beading area) of the battery unit 105 classified by the artificial intelligence models 145 to 148.

In one embodiment, when the TI is normally present in the battery unit 105, the state determination unit 160 may determine that the state of the can assembly is normal. In one embodiment, when the TI is not present, the state determination unit 160 may determine that the state of the can assembly is defective.

In one embodiment, when foreign substance is not present inside and/or outside the TI in the battery unit 105, the state determination unit 160 may determine that the state of the can assembly is normal. In one embodiment, when foreign substance is present inside and/or outside the TI, the state determination unit 160 may determine that the can assembly is in a defective state.

In one embodiment, when the TI is not lifted in the battery unit 105, the state determination unit 160 may determine that the state of the can assembly is normal. In one embodiment, when the TI is lifted, the state determination unit 160 may determine that the state of the can assembly is defective.

In one embodiment, when cracks are not present in the beading of the battery unit 105, the state determination unit 160 may determine that the state of the can assembly is normal. In one embodiment, when the cracks are present in the beading, the state determination unit 160 may determine that the can assembly is defective.

In one embodiment, the state determination unit 160 may transmit the state determination result of the battery unit 105 to the determination unit 180.

In one embodiment, the analysis unit 170 may analyze the state of the TI 210 in the can assembly 200 by performing the rule-based inspection on the image of the battery unit 105. Here, the rule-based inspection is an inspection that determines whether the battery unit 105 is defective based on gray level information of the image of the battery unit 105.

For example, the analysis unit 170 may determine at least one of whether the TI 220 is present in the battery unit 105, whether foreign substance is present inside the TI 220, whether the foreign substance is present outside the TI 220, or whether lifting of the TI 220 is present based on the gray level information of the image of the battery unit 105 and generate the result of the determination. According to one embodiment, the analysis unit 170 may sequentially determine whether the TI 220 is present in the battery unit 105, whether foreign substance is present inside the TI 220, whether the foreign substance is present outside the TI 220, or whether lifting of the TI 220 is present based on the gray level information of the image of the battery unit 105.

In one embodiment, the analysis unit 170 may transmit the state determination result of the battery unit 105 to the determination unit 180.

In one embodiment, the number of inspection items that may be inspected by the state determination unit 160 may be greater than the number of inspection items that may be inspected by the analysis unit 170. That is, the number of inspection items based on the artificial intelligence model may be greater than the number of inspection items based on the gray level information. For example, while the state determination unit 160 may inspect whether cracks are present in the beading, the analysis unit 170 may not inspect the same.

The determination unit 180, according to the invention, determines whether the battery unit 105 is a good product based on the results of the determination of the state determination unit 160 and the analysis unit 170. For example, when the results of the determination of the state determination unit 160 and the analysis unit 170 all indicate normal, the determination unit 180 may determine that the battery unit 105 is a good product. For example, when the result of the determination of at least one of the state determination unit 160 or the analysis unit 170 indicates a defect, the determination unit 180 may determine that the battery unit 105 is not a good product.

As described above, according to the monitoring device 100 according to one embodiment disclosed herein, a defective battery unit may be detected by accurately analyzing the TI state of the battery unit.

In FIG. 1, the artificial intelligence models of program 125 are shown separately, but it is only an example. In one embodiment, the artificial intelligence models 145, 146, 147, and 148 may be implemented as one artificial intelligence model.

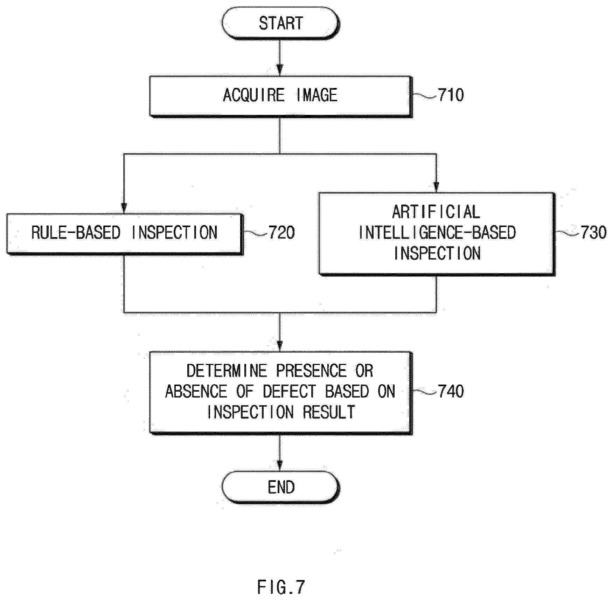

FIG. 7 is a view showing a method of operating the monitoring device 100 according to one embodiment disclosed herein. FIG. 7 may be described with reference to FIGS. 1 to 6.

Referring to FIG. 7, in operation 710, the monitoring device 100 may acquire an image. Here, the image may be an image of the battery unit 105 acquired by the image acquisition device 103.

In operation 720, the monitoring device 100 may perform rule-based inspection. In one embodiment, the monitoring device 100 may perform the rule-based inspection based on gray level information of the image.

For example, the monitoring device 100 may determine at least any one of whether the TI 220 is present in the battery unit 105, whether foreign substance is present inside the TI 220, whether the foreign substance is present outside the TI 220, or whether lifting of the TI 220 is present based on the gray level information of the image of the battery unit 105 and generate the result of the determination. According to one embodiment, the monitoring device 100 may sequentially determine whether the TI 220 is present in the battery unit 105, whether foreign substance is present inside the TI 220, whether the foreign substance is present outside the TI 220, or whether lifting of the TI 220 is present based on the gray level information of the image of the battery unit 105.

In operation 730, the monitoring device 100 may perform artificial intelligence model-based inspection. For example, the monitoring device 100 may perform the artificial intelligence model-based inspection of the image based on the previously learned artificial intelligence models 145, 146, 147, and 148.

In one embodiment, for example, the monitoring device 100 may determine the state of the can assembly by inputting the image of the battery unit 105 into the artificial intelligence model 145. In one embodiment, the monitoring device 100 may determine the state of the can assembly of the battery unit 105 based on the output of the artificial intelligence model 145. For example, the monitoring device 100 may determine the state of the can assembly of the battery unit 105 based on the state (e.g., whether the TI is present, whether foreign substance is present inside the TI, whether the foreign substance is present outside the TI, whether the lifting of the TI is present, or whether cracks are present in the beading area) of the battery unit 105 classified by the artificial intelligence models 145 to 148.

In one embodiment, when the TI is normally present in the battery unit 105, the monitoring device 100 may determine that the state of the can assembly is normal. In one embodiment, when the TI is not present, the monitoring device 100 may determine that the state of the can assembly is defective.

In one embodiment, when foreign substance is not present inside and/or outside the TI in the battery unit 105, the monitoring device 100 may determine that the state of the can assembly is normal. In one embodiment, when foreign substance is present inside and/or outside the TI, the monitoring device 100 may determine that the state of the can assembly is defective.

In one embodiment, when the TI is not lifted in the battery unit 105, the monitoring device 100 may determine that the state of the can assembly is normal. In one embodiment, when the TI is lifted, the monitoring device 100 may determine that the state of the can assembly is defective.

In one embodiment, when cracks are not present in the beading of the battery unit 105, the monitoring device 100 may determine that the state of the can assembly is normal. In one embodiment, when the cracks are present in the beading, the monitoring device 100 may determine that the state of the can assembly is defective.

In operation 740, the monitoring device 100 may determine the presence or absence of a defect based on the inspection result.

The monitoring device 100, according to the invention, determines that the state of the battery unit 105 is a good product when both the rule-based inspection result and the artificial intelligence model-based inspection result all indicate normal.

## Claims

1. A monitoring device (100) comprising:
an image acquisition unit (150) configured to acquire an image (310, 320, 410, 420, 510, 520, 610, 620) capturing at least one process processing device related to manufacturing of a battery cell (200);
a state determination unit (160) configured to generate a first determination result obtained by determining whether the battery cell is defective by inputting the acquired image (310, 320, 410, 420, 510, 520, 610, 620) into an artificial intelligence model configured to determine a state of a top insulator (220) of the battery cell (200);
an analysis unit (170) configured to generate a second determination result obtained by determining whether the battery cell (200) is defective based on gray level information of the acquired image (310, 320, 410, 420, 510, 520, 610, 620) , and
a determination unit (180) configured to determine whether the battery cell (200) is defective based on the first determination result;
wherein the determination unit (180) is configured to determine whether the battery cell is defective based on the first determination result and the second determination result , and determine that the battery cell (200) is not defective when both the first determination result and the second determination result indicate that the battery cell (200) is not defective.

2. The monitoring device (100) of claim 1,
wherein the determination unit (180) determines that the battery cell (200) is defective when at least one of the first determination result and the second determination result indicates that the battery cell (200) is defective.

3. The monitoring device (100) of claim 2,
wherein the number of items to be inspected based on the artificial intelligence model is greater than the number of items to be inspected based on the gray level information,
wherein the items to be inspected based on the grey level information include inspection of at least one of whether a top insulator (220) is present, whether foreign substance is present in the top insulator (220), whether foreign substance is present outside the top insulator (220), and whether the top insulator (220) is lifted, and
wherein the items to be inspected based on the artificial intelligence model inspection include the inspection of at least one of whether the top insulator (220)is present, whether foreign substance is present in the top insulator (220), whether foreign substance is present outside the top insulator (220), whether the top insulator (220) is lifted, and whether beading cracks are present.

4. The monitoring device (100) of claim 1, wherein the artificial intelligence model includes an artificial intelligence model configured to detect whether cracks are present in a beading of the battery cell (200) based on the image (310, 320, 410, 420, 510, 520, 610, 620).

5. A method of operating a monitoring device (100), comprising:
an operation of acquiring (S710) an image (310, 320, 410, 420, 510, 520, 610, 620) capturing at least one process processing device related to manufacturing of a battery cell (200);
an operation of generating (S730) a first determination result obtained by determining whether the battery cell (200) is defective by inputting the acquired image (310, 320, 410, 420, 510, 520, 610, 620) into an artificial intelligence model configured to determine a state of a top insulator (220) of the battery cell (200);
an operation of generating (S720) a second determination result obtained by determining whether the battery cell (200) is defective based on gray level information of the acquired image (310, 320, 410, 420, 510, 520, 610, 620) ,
an operation of determining (S740) whether the battery cell (200) is defective based on the first determination result and the second determination result , wherein it is determined that the battery cell (200) is not defective when both the first determination result and the second determination result indicate that the battery cell (200) is not defective.

6. The method of claim 5,
wherein the operation of determining (S740) whether the battery cell (200) is defective includes determining that the battery cell (200) is defective when at least one of the first determination result and the second determination result indicates that the battery cell (200) is defective.

7. The method of claim 6, wherein the number of inspection items based on the artificial intelligence model is greater than the number of inspection items based on the gray level information,
wherein the items to be inspected based on the grey level information include inspection of at least one of whether a top insulator (220) is present, whether foreign substance is present in the top insulator (220), whether foreign substance is present outside the top insulator (220), and whether the top insulator (220) is lifted, and
wherein the items to be inspected based on the artificial intelligence model inspection include the inspection of at least one of whether the top insulator (220) is present, whether foreign substance is present in the top insulator (220), whether foreign substance is present outside the top insulator (220), whether the top insulator (220) is lifted, and whether beading cracks are present.

8. The method of claim 5, wherein the artificial intelligence model includes an artificial intelligence model configured to detect whether cracks are present in a beading of the battery cell (200) based on the image (310, 320, 410, 420, 510, 520, 610, 620).

## Patentansprüche

1. Überwachungsvorrichtung (100), umfassend:
eine Bilderfassungseinheit (150), die dazu eingerichtet ist, ein Bild (310, 320, 410, 420, 510, 520, 610, 620) zu erfassen, das zumindest eine mit der Herstellung einer Batteriezelle (200) in Zusammenhang stehende Prozessbearbeitungsvorrichtung abbildet;
eine Zustandsbestimmungseinheit (160), die dazu eingerichtet ist, ein erstes Bestimmungsergebnis zu erzeugen, das erhalten wird, indem durch Eingeben des erfassten Bildes (310, 320, 410, 420, 510, 520, 610, 620) in ein Modell künstlicher Intelligenz, das dazu eingerichtet ist, einen Zustand eines oberen Isolators (220) der Batteriezelle (200) zu bestimmen, bestimmt wird, ob die Batteriezelle fehlerhaft ist;
eine Analyseeinheit (170), die dazu eingerichtet ist, ein zweites Bestimmungsergebnis zu erzeugen, das erhalten wird, indem auf Grundlage von Grauwertinformationen des erfassten Bildes (310, 320, 410, 420, 510, 520, 610, 620) bestimmt wird, ob die Batteriezelle (200) fehlerhaft ist, und
eine Bestimmungseinheit (180), die dazu eingerichtet ist, auf Grundlage des ersten Bestimmungsergebnisses zu bestimmen, ob die Batteriezelle (200) fehlerhaft ist;
wobei die Bestimmungseinheit (180) dazu eingerichtet ist, auf Grundlage des ersten Bestimmungsergebnisses und des zweiten Bestimmungsergebnisses zu bestimmen, ob die Batteriezelle fehlerhaft ist, und zu bestimmen, dass die Batteriezelle (200) nicht fehlerhaft ist, wenn sowohl das erste Bestimmungsergebnis als auch das zweite Bestimmungsergebnis anzeigen, dass die Batteriezelle (200) nicht fehlerhaft ist.

2. Überwachungsvorrichtung (100) nach Anspruch 1,
wobei die Bestimmungseinheit (180) bestimmt, dass die Batteriezelle (200) fehlerhaft ist, wenn das erste Bestimmungsergebnis und/oder das zweite Bestimmungsergebnis angibt, dass die Batteriezelle (200) fehlerhaft ist.

3. Überwachungsvorrichtung (100) nach Anspruch 2,
wobei die Anzahl der auf Grundlage des Modells künstlicher Intelligenz zu prüfenden Punkte größer ist als die Anzahl der auf Grundlage der Grauwertinformationen zu prüfenden Punkte,
wobei die auf Grundlage der Grauwertinformationen zu prüfenden Punkte die Prüfung umfassen, ob ein oberer Isolator (220) vorhanden ist, und/oder ob eine Fremdsubstanz in dem oberen Isolator (220) vorhanden ist, und/oder ob eine Fremdsubstanz außerhalb des oberen Isolators (220) vorhanden ist, und/oder ob der obere Isolator (220) angehoben ist, und
wobei die auf Grundlage der Prüfung mittels des Modells künstlicher Intelligenz zu prüfenden Punkte die Prüfung umfassen, ob der obere Isolator (220) vorhanden ist, und/oder ob eine Fremdsubstanz im oberen Isolator (220) vorhanden ist, und/oder ob eine Fremdsubstanz außerhalb des oberen Isolators (220) vorhanden ist, und/oder ob der obere Isolator (220) angehoben ist, und/oder ob Sickenrisse vorhanden sind.

4. Überwachungsvorrichtung (100) nach Anspruch 1, wobei das Modell künstlicher Intelligenz ein Modell künstlicher Intelligenz umfasst, das dazu eingerichtet ist, auf Grundlage des Bildes (310, 320, 410, 420, 510, 520, 610, 620) zu erkennen, ob Risse in einer Sicke der Batteriezelle (200) vorhanden sind.

5. Verfahren zum Betreiben einer Überwachungsvorrichtung (100), umfassend:
einen Vorgang des Erfassens (S710) eines Bildes (310, 320, 410, 420, 510, 520, 610, 620), das zumindest eine mit der Herstellung einer Batteriezelle (200) in Zusammenhang stehende Prozessbearbeitungsvorrichtung abbildet;
einen Vorgang des Erzeugens (S730) eines ersten Bestimmungsergebnisses, das erhalten wird, indem durch Eingeben des erfassten Bildes (310, 320, 410, 420, 510, 520, 610, 620) in ein Modell künstlicher Intelligenz, das dazu eingerichtet ist, einen Zustand eines oberen Isolators (220) der Batteriezelle (200) zu bestimmen, bestimmt wird, ob die Batteriezelle (200) fehlerhaft ist;
einen Vorgang des Erzeugens (S720) eines zweiten Bestimmungsergebnisses, das erhalten wird, indem auf Grundlage von Grauwertinformationen des erfassten Bildes (310, 320, 410, 420, 510, 520, 610, 620) bestimmt wird, ob die Batteriezelle (200) fehlerhaft ist,
einen Vorgang des Bestimmens (S740), ob die Batteriezelle (200) fehlerhaft ist, auf Grundlage des ersten Bestimmungsergebnisses und des zweiten Bestimmungsergebnisses, wobei bestimmt wird, dass die Batteriezelle (200) nicht fehlerhaft ist, wenn sowohl das erste Bestimmungsergebnis als auch das zweite Bestimmungsergebnis anzeigen, dass die Batteriezelle (200) nicht fehlerhaft ist.

6. Verfahren nach Anspruch 5,
wobei der Vorgang des Bestimmens (S740), ob die Batteriezelle (200) fehlerhaft ist, das Bestimmen umfasst, dass die Batteriezelle (200) fehlerhaft ist, wenn das erste Bestimmungsergebnis und/oder das zweite Bestimmungsergebnis angibt, dass die Batteriezelle (200) fehlerhaft ist.

7. Verfahren nach Anspruch 6, wobei die Anzahl der Prüfpunkte auf Grundlage des Modells künstlicher Intelligenz größer ist als die Anzahl der Prüfpunkte auf Grundlage der Grauwertinformationen,
wobei die auf Grundlage der Grauwertinformationen zu prüfenden Punkte die Prüfung umfassen, ob ein oberer Isolator (220) vorhanden ist, und/oder ob eine Fremdsubstanz in dem oberen Isolator (220) vorhanden ist, und/oder ob eine Fremdsubstanz außerhalb des oberen Isolators (220) vorhanden ist, und/oder ob der obere Isolator (220) angehoben ist, und
wobei die auf Grundlage der Prüfung mittels des Modells künstlicher Intelligenz zu prüfenden Punkte die Prüfung umfassen, ob der obere Isolator (220) vorhanden ist, und/oder ob eine Fremdsubstanz in dem oberen Isolator (220) vorhanden ist, und/oder ob eine Fremdsubstanz außerhalb des oberen Isolators (220) vorhanden ist, und/oder ob der obere Isolator (220) angehoben ist, und/oder ob Sickenrisse vorhanden sind.

8. Verfahren nach Anspruch 5, wobei das Modell künstlicher Intelligenz ein Modell künstlicher Intelligenz umfasst, das dazu eingerichtet ist, auf Grundlage des Bildes (310, 320, 410, 420, 510, 520, 610, 620) zu erkennen, ob Risse in einer Sicke der Batteriezelle (200) vorhanden sind.

## Revendications

1. Dispositif de surveillance (100), comprenant :
une unité d'acquisition d'image (150) configurée pour acquérir une image (310, 320, 410, 420, 510, 520, 610, 620) capturant au moins un dispositif de traitement de processus relatif à la fabrication d'une cellule de batterie (200) ;
une unité de détermination d'état (160) configurée pour générer un premier résultat de détermination obtenu en déterminant si la cellule de batterie est défectueuse par entrée de l'image acquise (310, 320, 410, 420, 510, 520, 610, 620) dans un modèle d'intelligence artificielle configuré pour déterminer un état d'un isolateur supérieur (220) de la cellule de batterie (200) ;
une unité d'analyse (170) configurée pour générer un deuxième résultat de détermination obtenu en déterminant si la cellule de batterie (200) est défectueuse sur la base d'informations de niveau de gris de l'image acquise (310, 320, 410, 420, 510, 520, 610, 620), et
une unité de détermination (180) configurée pour déterminer si la cellule de batterie (200) est défectueuse sur la base du premier résultat de détermination ;
où l'unité de détermination (180) est configurée pour déterminer si la cellule de batterie est défectueuse sur la base du premier résultat de détermination et du deuxième résultat de détermination, et déterminer que la cellule de batterie (200) n'est pas défectueuse si le premier résultat de détermination et le deuxième résultat de détermination indiquent tous deux que la cellule de batterie (200) n'est pas défectueuse.

2. Dispositif de surveillance (100) selon la revendication 1,
où l'unité de détermination (180) détermine que la cellule de batterie (200) est défectueuse si le premier et/ou le deuxième résultats de détermination indiquent que la cellule de batterie (200) est défectueuse.

3. Dispositif de surveillance (100) selon la revendication 2,
où le nombre d'éléments à inspecter sur la base du modèle d'intelligence artificielle est supérieur au nombre d'éléments à inspecter sur la base des informations de niveau de gris, où les éléments à inspecter sur la base des informations de niveau de gris comprennent l'inspection si un isolateur supérieur (220) est présent, et/ou si une substance étrangère est présente dans l'isolateur supérieur (220) et/ou si une substance étrangère est présente à l'extérieur de l'isolateur supérieur (220), et/ou si l'isolateur supérieur (220) est soulevé, et
où les articles à inspecter sur la base de l'inspection du modèle d'intelligence artificielle comprennent l'inspection si l'isolateur supérieur (220) est présent, et/ou si une substance étrangère est présente dans l'isolateur supérieur (220), et/ou si une substance étrangère est présente à l'extérieur de l'isolateur supérieur (220), et/ou si l'isolateur supérieur (220) est soulevé, et/ou si des fissures de cordons sont présentes.

4. Dispositif de surveillance (100) selon la revendication 1, où le modèle d'intelligence artificielle comprend un modèle d'intelligence artificielle configuré pour détecter si des fissures sont présentes dans un cordon de la cellule de batterie (200) sur la base de l'image (310, 320, 410, 420, 510, 520, 610, 620).

5. Procédé de fonctionnement d'un dispositif de surveillance (100), comprenant :
une opération d'acquisition (S710) d'une image (310, 320, 410, 420, 510, 520, 610, 620) capturant au moins un dispositif de traitement de processus relatif à la fabrication d'une cellule de batterie (200) ;
une opération de génération (S730) d'un premier résultat de détermination obtenu en déterminant si la cellule de batterie (200) est défectueuse par entrée de l'image acquise (310, 320, 410, 420, 510, 520, 610, 620) dans un modèle d'intelligence artificielle configuré pour déterminer un état d'un isolateur supérieur (220) de la cellule de batterie (200) ;
une opération de génération (S720) d'un deuxième résultat de détermination obtenu en déterminant si la cellule de batterie (200) est défectueuse sur la base des informations de niveau de gris de l'image acquise (310, 320, 410, 420, 510, 520, 610, 620),
une opération de détermination (S740) si la cellule de batterie (200) est défectueuse sur la base du premier résultat de détermination et du deuxième résultat de détermination, où il est déterminé que la cellule de batterie (200) n'est pas défectueuse si le premier résultat de détermination et le deuxième résultat de détermination indiquent tous deux que la cellule de batterie (200) n'est pas défectueuse.

6. Procédé selon la revendication 5,
où l'opération de détermination (S740) si la cellule de batterie (200) est défectueuse comprend la détermination que la cellule de batterie (200) est défectueuse si le premier et/ou le deuxième résultats de détermination indiquent que la cellule de batterie (200) est défectueuse.

7. Procédé selon la revendication 6, où le nombre d'éléments d'inspection basés sur le modèle d'intelligence artificielle est supérieur au nombre d'éléments d'inspection basés sur les informations de niveau de gris,
où les éléments à inspecter sur la base des informations de niveau de gris comprennent l'inspection si un isolateur supérieur (220) est présent, et/ou si une substance étrangère est présente dans l'isolateur supérieur (220) et/ou si une substance étrangère est présente à l'extérieur de l'isolateur supérieur (220), et/ou si l'isolateur supérieur (220) est soulevé, et où les articles à inspecter sur la base de l'inspection du modèle d'intelligence artificielle comprennent l'inspection si l'isolateur supérieur (220) est présent, et/ou si une substance étrangère est présente dans l'isolateur supérieur (220), et/ou si une substance étrangère est présente à l'extérieur de l'isolateur supérieur (220), et/ou si l'isolateur supérieur (220) est soulevé, et/ou si des fissures de cordons sont présentes.

8. Procédé selon la revendication 5, où le modèle d'intelligence artificielle comprend un modèle d'intelligence artificielle configuré pour détecter si des fissures sont présentes dans un cordon de la cellule de batterie (200) sur la base de l'image (310, 320, 410, 420, 510, 520, 610, 620).
